# EUROPEAN PATENT SPECIFICATION

(11) **EP 4 255 092 B1**
(45) Date of publication and mention of the grant of the patent: **12.08.2026**
(21) Application number: 23164995.5
(22) Date of filing: 29.03.2023
(51) Int. Cl.: H04W 76/12, H04W 88/04, H04W 88/16

(54) **PERSONAL INTERNET OF THINGS NETWORK ELEMENT COMMUNICATION WITH 5G SYSTEM AND OTHER PERSONAL INTERNET OF THINGS NETWORK ELEMENTS**
PERSÖNLICHES-INTERNET-DER-DINGE-NETZWERKELEMENTKOMMUNIKATION MIT 5G-SYSTEM UND ANDEREN PERSÖNLICHES-INTERNET-DER-DINGE-NETZWERKELEMENTEN
COMMUNICATION D'ÉLÉMENT DE RÉSEAU DE L'INTERNET DES OBJETS PERSONNEL AVEC UN SYSTÈME 5G ET D'AUTRES ÉLÉMENTS DE RÉSEAU DE L'INTERNET DES OBJETS PERSONNEL

(30) Priority: 29.03.2022 US 202263324914 P; 10.08.2022 US 202263396858 P
(43) Date of publication of application: 04.10.2023
(73) Proprietor: INTEL Corporation, Santa Clara, CA 95054 (US)
(72) Inventor: SRINIVASAN, Suresh, Portland, OR, 97229 (US); STOJANOVSKI, Alexandre Saso, 75020 Paris (FR); JAIN, Puneet, Portland, OR, 97229 (US)
(74) Representative: Viering, Jentschura & Partner mbB Patent- und Rechtsanwälte

(56) References cited:
- WO-A1-2021/040463
- WO-A1-2022/005207
- US-A1- 2020 412 565
- US-A1- 2022 287 116
- "3rd Generation Partnership Project; Technical Specification Group Services and System Aspects; Study on Personal Internet of Things (PIoT) networks (Release 18)", 23 September 2021 (2021-09-23), XP052053536, Retrieved from the Internet <URL:https://ftp.3gpp.org/tsg_sa/WG1_Serv/TSGS1_95e_EM_August2021/temp_post_SA93_versions/z_22859-i10.docx> [retrieved on 20210923]

## Description

### CROSS-REFERENCE TO RELATED APPLICATIONS

This application claims priority to US provisional application 63/324,914, filed on March 29, 2022, and to US provisional application 63/396,858, filed on August 10, 2022.

### TECHNICAL FIELD

This disclosure relates to a Personal Internet of Things Network Element, PINE, generating a PDU session at a specified Quality of Service (QoS) with a network, and using this PDU session to serve as a hub between a plurality of other PINES and the network.

### SUMMARY OF THE INVENTION

The invention is defined by the appended claims.

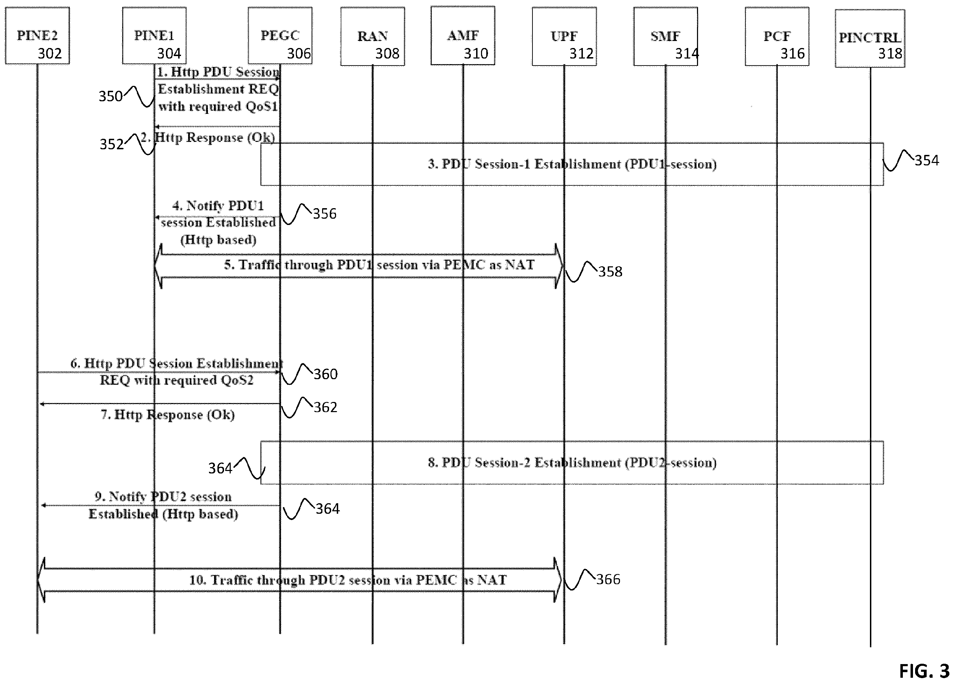

In the following, the invention is best understood in view of figure 3 and related description paragraphs, which present an embodiment of the invention. The other figures, aspects, examples and embodiments are provided for illustrative purposes to support the understanding of the invention.

An apparatus for communication within a Personal Internet of Things Network includes a radio frequency (RF) interface and one or more processors coupled to the RF interface and configured to receive a request from a first Personal Internet of Things Network Element, PINE, (304) to establish a 5G session in a 5G network; establish a protocol data unit, PDU, session (354) with the 5G network; transmit an indication of the PDU session (356) to the first PINE; receive an intended Quality of Service, QoS, from the first PINE for use in establishing the PDU session; establish the PDU session within the intended QoS; receive a request from a second PINE (302) to establish a 5G session in the 5G network at the intended QoS; and transmit an indication of the PDU session (356) for the first PINE to the second PINE.

A computer readable medium includes instructions which, when executed, implement a method comprising joining a Personal Internet of Things Network, PIN; sending data to a PIN Element (306), PINE, for the PINE to send to a 5G system; sending a request to the PINE with an intended first Quality of Service, QoS, for use in establishing a protocol data unit, PDU, session; receiving an indication of an existing PDU session (356) between the PINE (306) and another PINE, wherein the existing PDU has a second QoS; and controlling the transceiver to transmit within the existing PDU session.

A computer readable medium includes instructions which, when executed, implement a method comprising receiving a request from a first Personal Internet of Things Network Element, PINE, to establishing a 5G session in a 5G network; establishing a protocol data unit, PDU, session with the 5G network; and transmitting an indication of the PDU session to the first PINE; receiving an intended Quality of Service, QoS, from the first PINE for use in establishing the PDU session; establishing the PDU session within the intended QoS; receiving a request from a second PINE (302) to establish a 5G session in the 5G network at the intended QoS; and transmitting an indication of the PDU session (356) for the first PINE to the second PINE.

### BACKGROUND

Various embodiments generally may relate to the field of wireless communications and in particular the communication of a personal internet of things (PIN) network element (PINE) with a network via a PIN with gateway capabilities (PEGC).

Communication between a PINE and a network via a PEGC is known in at least Laeyoung, et al., WO 2021/040463 A1, which discloses "a method for performing, by relay UE, communication related to PS Data Off; the method may comprise the steps of: receiving a direct communication request message from remote UE, wherein the direct communication request message includes PS Data Off status information of the remote UE; determining whether or not to establish a protocol data unit (PDU) session for the remote UE, on the basis of the PS Data Off status information of the remote UE; and transmitting a PDU session establishment request message to a network node, on the basis of the determination to the establishing of the PDU session for the remote UE."

Various procedures and specifications for communication between PINEs and a network are known from the "3rd Generation Partnership Project; Technical Specification Group Services and System Aspects; Study on Personal Internet of Things (PIoT) networks (Release 18)"; 3GPP DRAFT; Z_22859-I19, 23 September 2021 (2021-09-23), XP052053536.

Sanders, et. al., US 2020/412565 A1 discloses an apparatus and methods for displaying data in an immersive environment wherein sensor (e.g., IoT sensor) data is aggregated via a gateway and various different types of air interfaces depending on application and location (e.g., LoRa, Wi-Fi, 5G NR, C-band, 60 GHz, CBRS, etc.), aggregated at a cloud service, processed through an analytics platform, and transmitted to a UI platform for display on a user interface. One implementation of displaying the sensor data comprises overlaying the sensor data in virtual reality in an immersive video wherein the video is a live stream from a 360-degree 8K camera. A user may interact with the overlaid sensor data within the user interface in a virtual environment to change settings to a desired degree. Artificial intelligence and machine learning may automatically suggest actions to the user or change settings based on sensor data.

### BRIEF DESCRIPTION OF THE FIGURES

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIG. 1 depicts an architecture for providing a relay path between Personal Internet of Things Network (PIN) Elements and a 5G System (5GS) via a PIN Element (PINE) with Gateway Capability (PEGC);
FIG. 2 depicts an architecture for providing communications between PINEs within the PIN;
FIG. 3 depicts various communication procedures;
FIG. 4 illustrates a network in accordance with various embodiments;
FIG. 5 schematically illustrates a wireless network in accordance with various embodiments;
FIG. 6 is a block diagram illustrating components;
FIG. 7 depicts a process for a PINE and/or firmware/software/hardware and/or a combination thereof that implements a PINE; and
FIG. 8 depicts a process for a PEGC and/or firmware/software/hardware and/or a combination thereof that implements a PEGC.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

The term "Personal IoT Network" (which may also be referred to herein as a "PIN") may refer to a configured and managed group of at least one PIN Element with Gateway Capability and one or more PINEs that are able to communicate each other and with a 5G network via a PIN Element with Gateway Capability and/or a PIN Element with Management Capability.

The term "PIN Element" (which may also be referred to herein as a "PINE") may refer to a device that can communicate within a PIN (via PIN direct connection or via PEGC), or outside the PIN via a PEGC.

The term "PIN Element with Gateway Capability" (which may also be referred to herein as a "PEGC") may refer to a PINE with the ability to provide connectivity to and from the 5G network for other PINEs, or to provide a relay for the communication between the PINEs.

The term "PIN Element with Management Capability" (which may also be referred to herein as a "PEMC") may refer to a PINE with a capability of managing the PIN.

With respect to the above elements, it is expressly noted that a PINE may have both a PIN Management Capability and a Gateway Capability.

The term "PIN direct connection" may refer to the connection between two PINEs without any 3rd Generation Partnership Project (3GPP) Random Access Network (RAN) or core network entity in the middle.

PIN connectivity supports communications between two or more PINEs, and/or communications between one or more PINEs and a 5GS. A PINE behind the PEGC may run an application with a different Quality of Service (QoS) requirement, which may need the PEGC to have a corresponding QoS flow for relaying traffic.

Aspects of the disclosure may relate to at least one or more of the following: how to support communications between PINEs within a PIN; how to enable a PINE to use a PEGC with the 5GS; whether and how the 5GS supports relay path management for a PINE when a PEGC is used for the relay, e.g. including setup and release; how to select a communication path for communication between PINEs, e.g. direct communication, such as via PEGC and/or via the 5GS; and/or whether and how the 5GS supports policy and QoS differentiation for traffic relayed between a PINE and the 5GS when a PEGC is used for the relay.

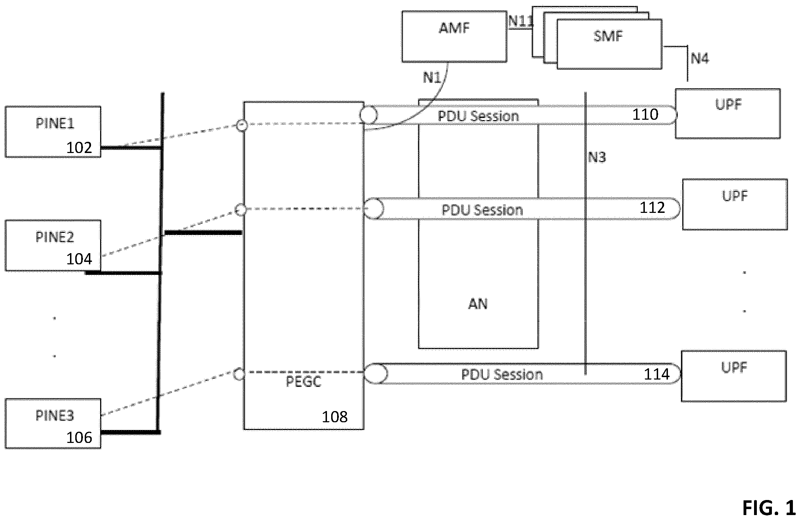

FIG. 1 depicts an architecture for providing a relay path between one or more PINEs and a 5GS via a PEGC. In this figure, three PINEs 102, 104, and 106 are in a PIN. PEGC 108 includes a gateway capability and is therefore able to serve as a gateway between any of the PINEs 102, 104, and 106 and the 5G network. PINEs 102, 104, and 106 are connected to a wireless Local Area Network (LAN) / Personal Area Network (PAN), and each element is reachable via the resulting wireless link. For context, the procedure to connect to the wireless network and assign an IP address is known and will not be recited herein.

Aspects of the disclosure may include any of the following:
To set up the communication, a PINE (102, 104, or 106) in the PIN may request the PEGC 108 to establish a 5G session, such as by using one or more request-response queries. The PEGC 108 may establish a protocol data unit (PDU) session (labelled individually as 110, 112, and 114) with the 5G network. This may be, for example, based on an existing procedure defined in any portion of the third generation partnership project (3GPP) technical specification (TS) 23.502 relating to PINs, and in particular any procedure in clause 4.3.2.2 of TS 23.502. The PINE (102, 104, or 106) may configure the PEGC 108 as its default gateway. In this manner, all the traffic may be sent to the 5G network via the PEGC relay. The PEGC 108 may act as a Network Address Translator (NAT) between the 5G network and the PIN by representing a unique IP address to some of all of the PINEs and/or PEMCs in the PIN. The PEGC 108 may establish a unique PDU session (110, 112, or 114) with the 5G network for every PINE requesting 5GS relay access through the PEGC. The PEGC may map a local fully qualified domain name (FQDN) or IP address of the PINE to the PDU session ID and use this mapping to forward the data from/to the PINE and the 5G PDU unique session.

With respect to QoS differentiation, various aspects of the disclosure may relate to one or both of the following two ways to achieve differentiated services:

A PINE request for a desired QoS may request the PEMC to set up a PDU session such as by using control signals with the intended QoS, and the PEGC 108 may set up an appropriate PDU session (110, 112, or 114). All the traffic from the PIN may be forwarded to the PDU session (110, 112, or 114) with the desired QoS.

The PINE may use differentiated services code point (DSCP) markings on the IP packet in the PIN to indicate the desired QoS, and the PEGC may set up an appropriate 5G QoS Identifier (5QI) PDU session with the data network name (DNN). Furthermore, the PEGC may reset the QoS marking on the IP packet and forward it to the established PDU session. The PEGC may also provide the necessary QoS as indicated by the PINE on the IP packets in the PIN.

Regarding session release, the PINE in the PIN may request 5G session release from the PEGC using one or more request-response queries. The PEGC may then release the respective PDU associated with the PINE. For this, the PEGC may use the PDU ID and the PINE FQDN and/or the IP address of the PINE in the local PIN.

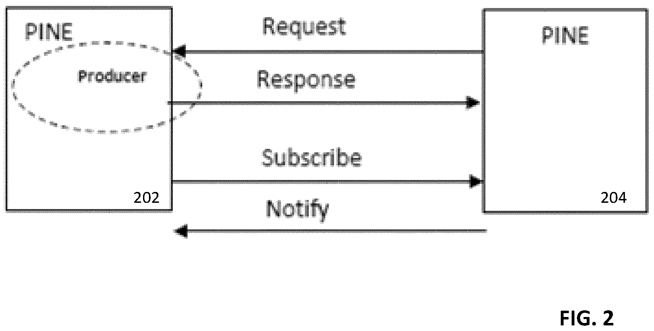

Turning to FIG. 2, this figure depicts an architecture for providing communications between PINEs within the PIN. Embodiments herein are described with respect to the following assumption that the PINEs 202 and 204 are connected to a wireless LAN / PAN and that each element is reachable via the wireless link. The procedure to connect to the wireless network and assign IP address may be beyond the scope of this document and will therefore not be recounted herein.

Various aspects may include one or more of the following aspects:
Devices may engage in direct communication. In this manner, one or more PINEs, the PEGC, and/or the PEMC may use request-response and subscribe-notify methods to communicate with each other. Since PINEs are reachable via direct connection or in a LAN connection, PINEs may communicate with each other directly using an intended PINE's FQDN or IP address.

Devices may communicate via the PEGC. The PINE(s) may set the PEGC as its/their default gateway so that all the communication is via the PEGC. Packets from a PINE intended for PINEs in the PIN may be routed by the PEGC locally, since the PEGC has PINE repositories, which may include the FQDN or the IP address of the PINE in the PIN.

Devices may communicate via 5GS. Any or all of the packets from the PINE(s), including local PIN destination, may be routed to the PEGC gateway. In case of a local destination address, the PEGC may map it to its NAT address and then forward it to the 5G Core Network (5GC), which may then in turn forward it back to the PEGC. Once the PEGC receives such a packet, it may translate the NAT address to a local PIN address and forward it to the appropriate PINE.

FIG. 3 depicts various communication procedures. This figure includes a first PINE 304, a second PINE 302, and a PEGC 306, which is configured to communicate with a PIN control subsystem 318. The figure further includes a radio access network (RAN) 308, an Access and Mobility Management Function (AMF) 310, a User Plane Function (UPF) 312, a Session Management Function (SMF) 314, and a Policy Control Function (PCF) 316.
1. A PINE (PINE1 304) in the PIN sends an HTTP request 350 to the PEGC 306 for PDU session establishment with the required QoS.
2. PEGC 306 may acknowledge the PINE (PINE1 304) with an HTTP OK response 352.
3. PEGC 306 establishes a PDU session 354 with the requested QoS on behalf of the PINE (PINE1 304) as described in any standard of the 3^{rd} Generation Partnership Project (3GPP) technical specification TS 23.502, and in particular as described in clause 4.3.2.2 of TS 23.502. PEGC 306 may identify this session as PDU1 mapped to the requested PINE (PINE1 304). (PINE1 304 can request a different QoS using step 1, and PEGC 306 may set up different sessions with the requested QoS and may assign a unique local destination port as shown in FIG. 1.
4. Once the PDU session is established, PEGC 306 notifies 356 the PINE (PINE1 304) about the successful PDU establishment with the intended QoS.
5. The PINE (PINE1 304) may forward 358 all the traffic intended with QoS1 to the assigned PEGC 306 port. PEGC 306 may act as a router + NAT to forward the packet to the PDU1 session.
6. Another PINE (PINE2 302) in the PIN sends an HTTP request 360 to PEGC 306 to establish the PDU session with the required QoS.
7. PEGC 306 may acknowledge the PINE (PINE2 302) with an HTTP OK response 362.
8. PEGC 306 establishes the PDU session 364 with the requested QoS on behalf of the PINE (PINE2 302) as described in 3^{rd} Generation Partnership Project (3GPP) standard TS 23.502, and in particular to clause 4.3.2.2 of TS 23.502. PEGC 306 may identify this session as PDU2, mapped to the requested PINE (PINE2 302). (PINE2 302 may request a different QoS using step 6, and PEGC 306 may set up different sessions with the requested QoS and assign a unique local destination port as depicted in FIG. 1.
9. Once the PDU session is established, PEGC 306 notifies 364 the PINE (PINE2 302) about the successful PDU establishment with the intended QoS.
10. PINE (PINE2 302) forwards 366 all the traffic intended with QoS2 to the assigned PEGC 306 port. PEGC 306 may act as a router + NAT to forward the packet to the PDU2 session.

If a first PINE requests a PDU session at a first QoS, the PEGC may establish the PDU at the first QoS according to the steps above. If a second PINE requests a PDU session at the second QoS, and assuming that the second QoS is the same as the first QoS, the second PINE may optionally join the PDU session established for the first PINE. Optionally, if the second QoS is different from the first QoS, it is also possible for the second PINE to join the PDU session established for the first PINE.

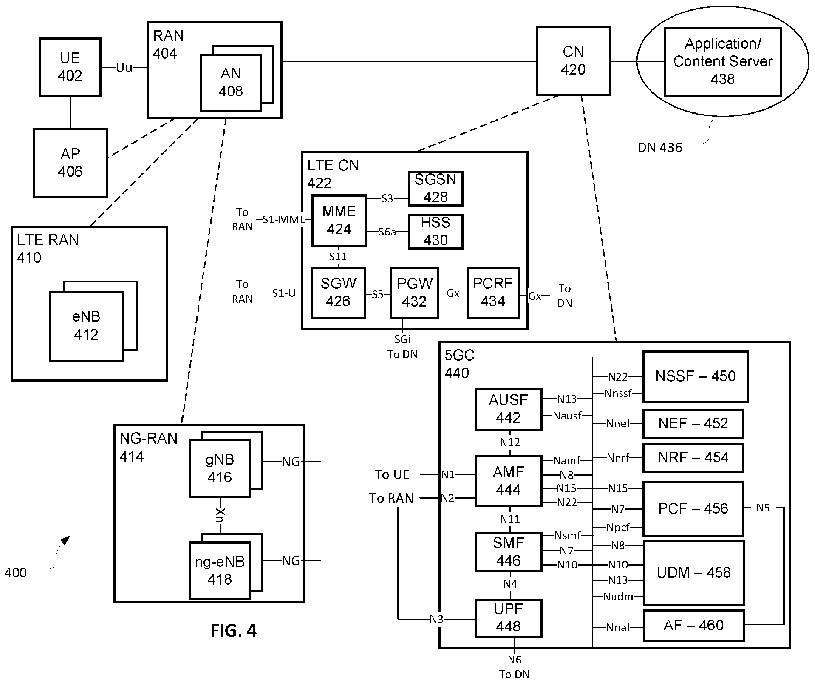

In the following, various systems and implementations for the above will be described. FIGs. 4-6 illustrate various systems, devices, and components that may implement aspects of disclosed embodiments.

FIG. 4 illustrates a network 400 in accordance with various embodiments. The network 400 may operate in a manner consistent with 3GPP technical specifications for LTE or 5G/New Radio (NR) systems. However, the example embodiments are not limited in this regard and the described embodiments may apply to other networks that benefit from the principles described herein, such as future 3GPP systems, or the like.

The network 400 may include a user equipment (UE) 402, which may include any mobile or non-mobile computing device designed to communicate with a RAN 404 via an over-the-air connection. The UE 402 may be communicatively coupled with the RAN 404 by a Uu interface. The UE 402 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 400 may include a plurality of UEs coupled directly with one another via a sidelink interface. The UEs may be machine to machine (M2M)/device to device (D2D) devices that communicate using physical sidelink channels such as, but not limited to, physical sidelink broadcast channel (PSBCH), physical sidelink downlink channel (PSDCH), physical sidelink shared channel (PSSCH), physical sidelink control channel (PSCCH), physical sidelink feedback channel (PSFCH), etc.

In some embodiments, the UE 402 may additionally communicate with an AP 406 via an over-the-air connection. The AP 406 may manage a wireless local area network (WLAN) connection, which may serve to offload some/all network traffic from the RAN 404. The connection between the UE 402 and the AP 406 may be consistent with any IEEE 802.11 protocol, wherein the AP 406 could be a wireless fidelity (Wi-Fi^{®}) router. In some embodiments, the UE 402, RAN 404, and AP 406 may utilize cellular-WLAN aggregation (for example, LTE-WLAN aggregation (LWA)/ LTE WLAN Radio Level Integration with IPsec Tunnel (LWIP). Cellular-WLAN aggregation may involve the UE 402 being configured by the RAN 404 to utilize both cellular radio resources and WLAN resources.

The RAN 404 may include one or more access nodes (AN), for example, AN 408. AN 408 may terminate air-interface protocols for the UE 402 by providing access stratum protocols including radio resource control (RRC), package data convergence protocol (PDCP), radio link control (RLC), medium access control (MAC), and layer 1 (L1) protocols. In this manner, the AN 408 may enable data/voice connectivity between CN 420 and the UE 402. In some embodiments, the AN 408 may be implemented in a discrete device or as one or more software entities running on server computers as part of, for example, a virtual network, which may be referred to as a cloud radio access network (CRAN) or virtual baseband unit pool. The AN 408 be referred to as a base station (BS), gNB, RAN node, eNB, ng-eNB, NodeB, RSU, TRxP, TRP, etc. The AN 408 may be a macrocell base station or a low power base station for providing femtocells, picocells or other like cells having smaller coverage areas, smaller user capacity, or higher bandwidth compared to macrocells.

In embodiments in which the RAN 404 includes a plurality of ANs, they may be coupled with one another via an X2 interface (if the RAN 404 is an LTE RAN) or an Xn interface (if the RAN 404 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 404 may each manage one or more cells, cell groups, component carriers, etc. to provide the UE 402 with an air interface for network access. The UE 402 may be simultaneously connected with a plurality of cells provided by the same or different ANs of the RAN 404. For example, the UE 402 and RAN 404 may use carrier aggregation to allow the UE 402 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 404 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios, the UE 402 or AN 408 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 404 may be an LTE RAN 410 with eNBs, for example, eNB 412. The LTE RAN 410 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 404 may be an NG-RAN 414 with gNBs, for example, gNB 416, or ng-eNBs, for example, ng-eNB 418. The gNB 416 may connect with 5G-enabled UEs using a 5G NR interface. The gNB 416 may connect with a 5G core through an NG interface, which may include an N2 interface or an N3 interface. The ng-eNB 418 may also connect with the 5G core through an NG interface, but may connect with a UE via an LTE air interface. The gNB 416 and the ng-eNB 418 may connect with each other over an Xn interface.

In some embodiments, the NG interface may be split into two parts, an NG user plane (NG-U) interface, which carries traffic data between the nodes of the NG-RAN 414 and a UPF 448 (e.g., N3 interface), and an NG control plane (NG-C) interface, which is a signaling interface between the nodes of the NG-RAN414 and an AMF 444 (e.g., N2 interface).

The NG-RAN 414 may provide a SG/NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 402 can be configured with multiple BWPs where each BWP configuration has a different SCS. When a BWP change is indicated to the UE 402, the SCS of the transmission is changed as well. Another use case example of BWP is related to power saving. In particular, multiple BWPs can be configured for the UE 402 with different amount of frequency resources (for example, PRBs) to support data transmission under different traffic loading scenarios. A BWP containing a smaller number of PRBs can be used for data transmission with small traffic load while allowing power saving at the UE 402 and in some cases at the gNB 416. A BWP containing a larger number of PRBs can be used for scenarios with higher traffic load.

The RAN 404 is communicatively coupled to CN 420 that includes network elements to provide various functions to support data and telecommunications services to customers/subscribers (for example, users of UE 402). The components of the CN 420 may be implemented in one physical node or separate physical nodes. In some embodiments, NFV may be utilized to virtualize any or all of the functions provided by the network elements of the CN 420 onto physical compute/storage resources in servers, switches, etc. A logical instantiation of the CN 420 may be referred to as a network slice, and a logical instantiation of a portion of the CN 420 may be referred to as a network sub-slice.

In some embodiments, the CN 420 may be an LTE CN 422, which may also be referred to as an EPC. The LTE CN 422 may include MME 424, SGW 426, SGSN 428, HSS 430, PGW 432, and PCRF 434 coupled with one another over interfaces (or "reference points") as shown. Functions of the elements of the LTE CN 422 may be briefly introduced as follows.

The MME 424 may implement mobility management functions to track a current location of the UE 402 to facilitate paging, bearer activation/deactivation, handovers, gateway selection, authentication, etc.

The SGW 426 may terminate an S1 interface toward the RAN and route data packets between the RAN and the LTE CN 422. The SGW 426 may be a local mobility anchor point for inter-RAN node handovers and also may provide an anchor for inter-3GPP mobility. Other responsibilities may include lawful intercept, charging, and some policy enforcement.

The SGSN 428 may track a location of the UE 402 and perform security functions and access control. In addition, the SGSN 428 may perform inter-EPC node signaling for mobility between different RAT networks; PDN and S-GW selection as specified by MME 424; MME selection for handovers; etc. The S3 reference point between the MME 424 and the SGSN 428 may enable user and bearer information exchange for inter-3GPP access network mobility in idle/active states.

The HSS 430 may include a database for network users, including subscription-related information to support the network entities' handling of communication sessions. The HSS 430 can provide support for routing/roaming, authentication, authorization, naming/addressing resolution, location dependencies, etc. An S6a reference point between the HSS 430 and the MME 424 may enable transfer of subscription and authentication data for authenticating/authorizing user access to the LTE CN 420.

The PGW 432 may terminate an SGi interface toward a data network (DN) 436 that may include an application/content server 438. The PGW 432 may route data packets between the LTE CN 422 and the data network 436. The PGW 432 may be coupled with the SGW 426 by an S5 reference point to facilitate user plane tunneling and tunnel management. The PGW 432 may further include a node for policy enforcement and charging data collection (for example, PCEF). Additionally, the SGi reference point between the PGW 432 and the data network 436 may be an operator external public, a private PDN, or an intra-operator packet data network, for example, for provision of IMS services. The PGW 432 may be coupled with a PCRF 434 via a Gx reference point.

The PCRF 434 is the policy and charging control element of the LTE CN 422. The PCRF 434 may be communicatively coupled to the app/content server 438 to determine appropriate QoS and charging parameters for service flows. The PCRF 432 may provision associated rules into a PCEF (via Gx reference point) with appropriate TFT and QCI.

In some embodiments, the CN 420 may be a 5GC 440. The 5GC 440 may include an AUSF 442, AMF 444, SMF 446, UPF 448, NSSF 450, NEF 452, NRF 454, PCF 456, UDM 458, and AF 460 coupled with one another over interfaces (or "reference points") as shown. Functions of the elements of the 5GC 440 may be briefly introduced as follows.

The AUSF 442 may store data for authentication of UE 402 and handle authentication-related functionality. The AUSF 442 may facilitate a common authentication framework for various access types. In addition to communicating with other elements of the 5GC 440 over reference points as shown, the AUSF 442 may exhibit an Nausf service-based interface.

The AMF 444 may allow other functions of the 5GC 440 to communicate with the UE 402 and the RAN 404 and to subscribe to notifications about mobility events with respect to the UE 402. The AMF 444 may be responsible for registration management (for example, for registering UE 402), connection management, reachability management, mobility management, lawful interception of AMF-related events, and access authentication and authorization. The AMF 444 may provide transport for SM messages between the UE 402 and the SMF 446, and act as a transparent proxy for routing SM messages. AMF 444 may also provide transport for SMS messages between UE 402 and an SMSF. AMF 444 may interact with the AUSF 442 and the UE 402 to perform various security anchor and context management functions. Furthermore, AMF 444 may be a termination point of a RAN CP interface, which may include or be an N2 reference point between the RAN 404 and the AMF 444; and the AMF 444 may be a termination point of NAS (N1) signaling, and perform NAS ciphering and integrity protection. AMF 444 may also support NAS signaling with the UE 402 over an N3 IWF interface.

The SMF 446 may be responsible for SM (for example, session establishment, tunnel management between UPF 448 and AN 408); UE IP address allocation and management (including optional authorization); selection and control of UP function; configuring traffic steering at UPF 448 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 444 over N2 to AN 408; and determining SSC mode of a session. SM may refer to management of a PDU session, and a PDU session or "session" may refer to a PDU connectivity service that provides or enables the exchange of PDUs between the UE 402 and the data network 436.

The UPF 448 may act as an anchor point for intra-RAT and inter-RAT mobility, an external PDU session point of interconnect to data network 436, and a branching point to support multi-homed PDU session. The UPF 448 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 448 may include an uplink classifier to support routing traffic flows to a data network.

The NSSF 450 may select a set of network slice instances serving the UE 402. The NSSF 450 may also determine allowed NSSAI and the mapping to the subscribed S-NSSAIs, if needed. The NSSF 450 may also determine the AMF set to be used to serve the UE 402, or a list of candidate AMFs based on a suitable configuration and possibly by querying the NRF 454. The selection of a set of network slice instances for the UE 402 may be triggered by the AMF 444 with which the UE 402 is registered by interacting with the NSSF 450, which may lead to a change of AMF. The NSSF 450 may interact with the AMF 444 via an N22 reference point; and may communicate with another NSSF in a visited network via an N31 reference point (not shown). Additionally, the NSSF 450 may exhibit an Nnssf service-based interface.

The NEF 452 may securely expose services and capabilities provided by 3GPP network functions for third party, internal exposure/re-exposure, AFs (e.g., AF 460), edge computing or fog computing systems, etc. In such embodiments, the NEF 452 may authenticate, authorize, or throttle the AFs. NEF 452 may also translate information exchanged with the AF 460 and information exchanged with internal network functions. For example, the NEF 452 may translate between an AF-Service-Identifier and an internal 5GC information. NEF 452 may also receive information from other NFs based on exposed capabilities of other NFs. This information may be stored at the NEF 452 as structured data, or at a data storage NF using standardized interfaces. The stored information can then be re-exposed by the NEF 452 to other NFs and AFs, or used for other purposes such as analytics. Additionally, the NEF 452 may exhibit an Nnef service-based interface.

The NRF 454 may support service discovery functions, receive NF discovery requests from NF instances, and provide the information of the discovered NF instances to the NF instances. NRF 454 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 454 may exhibit the Nnrf service-based interface.

The PCF 456 may provide policy rules to control plane functions to enforce them, and may also support unified policy framework to govern network behavior. The PCF 456 may also implement a front end to access subscription information relevant for policy decisions in a UDR of the UDM 458. In addition to communicating with functions over reference points as shown, the PCF 456 exhibit an Npcf service-based interface.

The UDM 458 may handle subscription-related information to support the network entities' handling of communication sessions, and may store subscription data of UE 402. For example, subscription data may be communicated via an N8 reference point between the UDM 458 and the AMF 444. The UDM 458 may include two parts, an application front end and a UDR. The UDR may store subscription data and policy data for the UDM 458 and the PCF 456, and/or structured data for exposure and application data (including PFDs for application detection, application request information for multiple UEs 402) for the NEF 452. The Nudr service-based interface may be exhibited by the UDR 221 to allow the UDM 458, PCF 456, and NEF 452 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 458 may exhibit the Nudm service-based interface.

The AF 460 may provide application influence on traffic routing, provide access to NEF, and interact with the policy framework for policy control.

In some embodiments, the 5GC 440 may enable edge computing by selecting operator/3^{rd} party services to be geographically close to a point that the UE 402 is attached to the network. This may reduce latency and load on the network. To provide edge-computing implementations, the 5GC 440 may select a UPF 448 close to the UE 402 and execute traffic steering from the UPF 448 to data network 436 via the N6 interface. This may be based on the UE subscription data, UE location, and information provided by the AF 460. In this way, the AF 460 may influence UPF (re)selection and traffic routing. Based on operator deployment, when AF 460 is considered to be a trusted entity, the network operator may permit AF 460 to interact directly with relevant NFs. Additionally, the AF 460 may exhibit an Naf service-based interface.

The data network 436 may represent various network operator services, Internet access, or third party services that may be provided by one or more servers including, for example, application/content server 438.

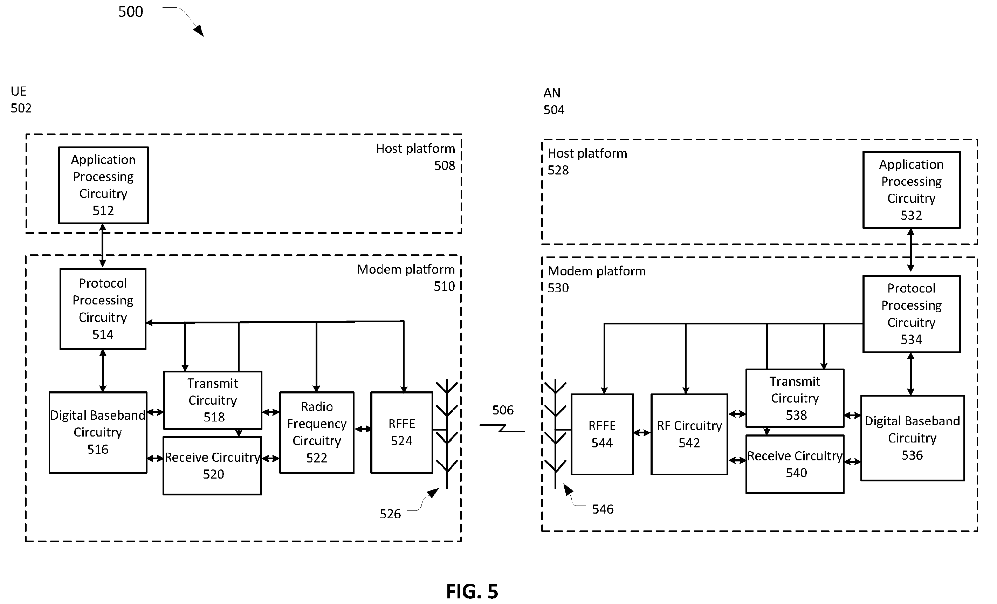

FIG. 5 schematically illustrates a wireless network 500 in accordance with various embodiments. The wireless network 500 may include a UE 502 in wireless communication with an AN 504. The UE 502 and AN 504 may be similar to, and substantially interchangeable with, like-named components described elsewhere herein.

The UE 502 may be communicatively coupled with the AN 504 via connection 506. The connection 506 is illustrated as an air interface to enable communicative coupling, and can be consistent with cellular communications protocols such as an LTE protocol or a 5G NR protocol operating at mmWave or sub-6GHz frequencies.

The UE 502 may include a host platform 508 coupled with a modem platform 510. The host platform 508 may include application processing circuitry 512, which may be coupled with protocol processing circuitry 514 of the modem platform 510. The application processing circuitry 512 may run various applications for the UE 502 that source/sink application data. The application processing circuitry 512 may further implement one or more layer operations to transmit/receive application data to/from a data network. These layer operations may include transport (for example UDP) and Internet (for example, IP) operations

The protocol processing circuitry 514 may implement one or more of layer operations to facilitate transmission or reception of data over the connection 506. The layer operations implemented by the protocol processing circuitry 514 may include, for example, MAC, RLC, PDCP, RRC and NAS operations.

The modem platform 510 may further include digital baseband circuitry 516 that may implement one or more layer operations that are "below" layer operations performed by the protocol processing circuitry 514 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 510 may further include transmit circuitry 518, receive circuitry 520, RF circuitry 522, and RF front end (RFFE) 524, which may include or connect to one or more antenna panels 526. Briefly, the transmit circuitry 518 may include a digital-to-analog converter, mixer, intermediate frequency (IF) components, etc.; the receive circuitry 520 may include an analog-to-digital converter, mixer, IF components, etc.; the RF circuitry 522 may include a low-noise amplifier, a power amplifier, power tracking components, etc.; RFFE 524 may include filters (for example, surface/bulk acoustic wave filters), switches, antenna tuners, beamforming components (for example, phase-array antenna components), etc. The selection and arrangement of the components of the transmit circuitry 518, receive circuitry 520, RF circuitry 522, RFFE 524, and antenna panels 526 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 514 may include one or more instances of control circuitry (not shown) to provide control functions for the transmit/receive components.

A UE reception may be established by and via the antenna panels 526, RFFE 524, RF circuitry 522, receive circuitry 520, digital baseband circuitry 516, and protocol processing circuitry 514. In some embodiments, the antenna panels 526 may receive a transmission from the AN 504 by receive-beamforming signals received by a plurality of antennas/antenna elements of the one or more antenna panels 526.

A UE transmission may be established by and via the protocol processing circuitry 514, digital baseband circuitry 516, transmit circuitry 518, RF circuitry 522, RFFE 524, and antenna panels 526. In some embodiments, the transmit components of the UE 504 may apply a spatial filter to the data to be transmitted to form a transmit beam emitted by the antenna elements of the antenna panels 526.

Similar to the UE 502, the AN 504 may include a host platform 528 coupled with a modem platform 530. The host platform 528 may include application processing circuitry 532 coupled with protocol processing circuitry 534 of the modem platform 530. The modem platform may further include digital baseband circuitry 536, transmit circuitry 538, receive circuitry 540, RF circuitry 542, RFFE circuitry 544, and antenna panels 546. The components of the AN 504 may be similar to and substantially interchangeable with like-named components of the UE 502. In addition to performing data transmission/reception as described above, the components of the AN 508 may perform various logical functions that include, for example, RNC functions such as radio bearer management, uplink and downlink dynamic radio resource management, and data packet scheduling.

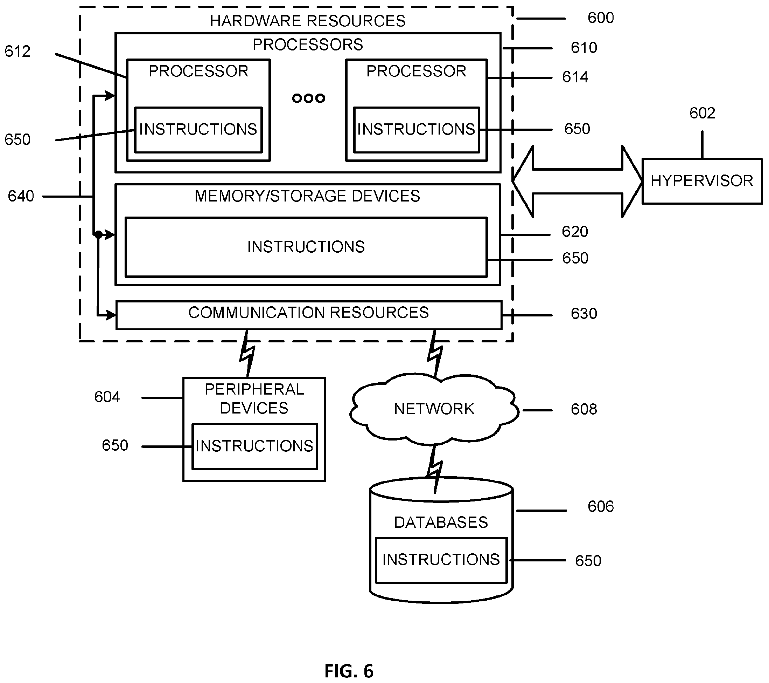

FIG. 6 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 6 shows a diagrammatic representation of hardware resources 600 including one or more processors (or processor cores) 610, one or more memory/storage devices 620, and one or more communication resources 630, each of which may be communicatively coupled via a bus 640 or other interface circuitry. For embodiments where node virtualization (e.g., NFV) is utilized, a hypervisor 602 may be executed to provide an execution environment for one or more network slices/sub-slices to utilize the hardware resources 600.

The processors 610 may include, for example, a processor 612 and a processor 614. The processors 610 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radiofrequency integrated circuit (RFIC), another processor (including those discussed herein), or any suitable combination thereof.

The memory/storage devices 620 may include main memory, disk storage, or any suitable combination thereof. The memory/storage devices 620 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 630 may include interconnection or network interface controllers, components, or other suitable devices to communicate with one or more peripheral devices 604 or one or more databases 606 or other network elements via a network 608. For example, the communication resources 630 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 650 may include software, a program, an application, an applet, an app, or other executable code for causing at least any of the processors 610 to perform any one or more of the methodologies discussed herein. The instructions 650 may reside, completely or partially, within at least one of the processors 610 (e.g., within the processor's cache memory), the memory/storage devices 620, or any suitable combination thereof. Furthermore, any portion of the instructions 650 may be transferred to the hardware resources 600 from any combination of the peripheral devices 604 or the databases 606. Accordingly, the memory of processors 610, the memory/storage devices 620, the peripheral devices 604, and the databases 606 are examples of computer-readable and machine-readable media.

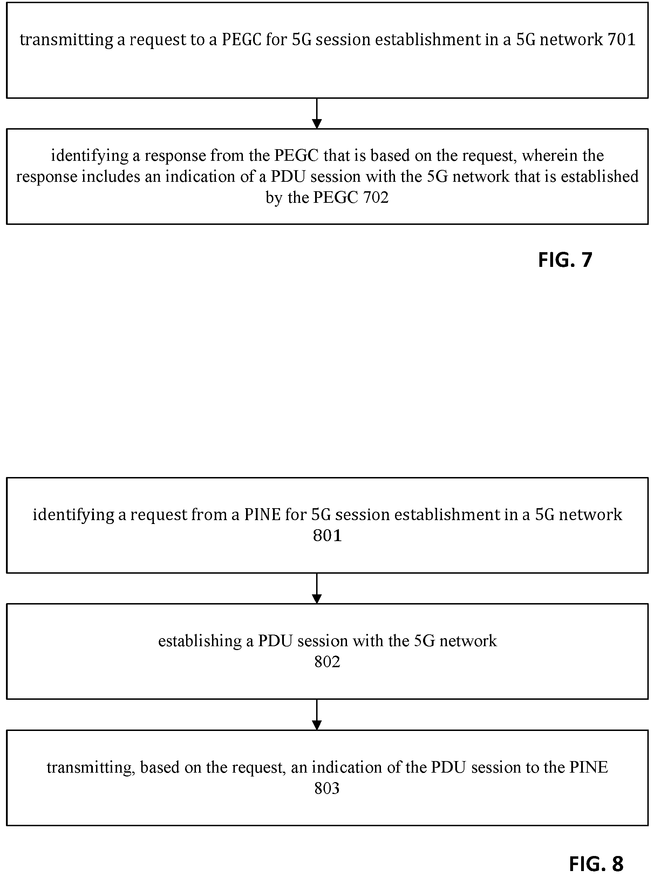

In the following, example procedures will be disclosed. In some embodiments, the electronic device(s), network(s), system(s), chip(s) or component(s), or portions or implementations thereof, of FIGs. 4-6, or some other figure herein, may be configured to perform one or more processes, techniques, or methods as described herein, or portions thereof. One such process is depicted in FIG. 7. The process of FIG. 7 may be performed by a PINE and/or firmware/software/hardware and/or some combination thereof that implements a PINE, or some other electronic device. The process may include transmitting, at 701, a request to a PEGC for 5G session establishment in a 5G network; and identifying, at 702, a response from the PEGC that is based on the request, wherein the response includes an indication of a PDU session with the 5G network that is established by the PEGC.

Another such process is depicted in FIG. 8. The process of FIG. 8 may be performed by a PEGC and/or firmware/software/hardware and/or some combination thereof that implements a PEGC, or some other electronic device. The process may include identifying, at 801, a request from a PINE for 5G session establishment in a 5G network; establishing, at 802, a PDU session with the 5G network; and transmitting, at 803 based on the request, an indication of the PDU session to the PINE.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

| | | | | | |
|---|---|---|---|---|---|
| 3GPP | Third Generation Partnership Project | API | Application Programming Interface | BS | Base Station |
| | | | | BSR | Buffer Status Report |
| 4G | Fourth Generation | APN | Access Point Name | | |
| 5G | Fifth Generation | ARP | Allocation and Retention Priority | BW | Bandwidth |
| 5GC | 5G Core network | | | BWP | Bandwidth Part |
| AC | Application Client | ARQ | Automatic Repeat Request | C-RNTI | Cell Radio Network Temporary |
| ACR | Application Context Relocation | AS | Access Stratum | | Identity |
| | | ASP | Application Service Provider | CA | Carrier Aggregation, Certification Authority |
| ACK | Acknowledgement | | | | |
| ACID | Application Client Identification | | | | |
| | | ASN.1 | Abstract Syntax Notation One | | |
| AF | Application Function | | | CAPEX | CAPital EXpenditure |
| | | AUSF | Authentication Server Function | | |
| AM | Acknowledged Mode | | | CBRA | Contention Based Random Access |
| | | AWGN | Additive | | |
| AMBR | Aggregate Maximum Bit Rate | | White Gaussian Noise | CC | Component Carrier, Country Code, Cryptographic Checksum |
| AMF | Access and Mobility Management Function | BAP | Backhaul Adaptation Protocol | | |
| | | BCH | Broadcast Channel | CCA | Clear Channel Assessment |
| | | BER | Bit Error Ratio | | |
| AN | Access Network | BFD | Beam Failure Detection | CCE | Control Channel Element |
| ANR | Automatic Neighbour Relation | | | | |
| | | BLER | Block Error Rate | CCCH | Common Control Channel |
| AOA | Angle of Arrival | BPSK | Binary Phase Shift Keying | | |
| | | | | CE | Coverage Enhancement |
| AP | Application Protocol, Antenna Port, Access Point | BRAS | Broadband Remote Access Server | | |
| | | | | CDM | Content Delivery Network |
| | | BSS | Business Support System | | |
| CDMA | Division Code-Multiple Access | CO | Conditional Optional | CRC | Cyclic Check Redundancy |
| | | CoMP | Coordinated Multi-Point | CRI | Channel-State Information Resource Indicator, CSI-RS Resource Indicator |
| CDR | Charging Data Request | | | | |
| | | CORESET | Control Resource Set | | |
| CDR | Charging Data Response | | | | |
| | | COTS | Commercial Off-The-Shelf | C-RNTI | Cell RNTI |
| CFRA | Contention Free Random Access | | | CS | Circuit Switched |
| | | CP | Control Plane, Cyclic Prefix, Connection Point | CSCF | call session control function |
| CG | Cell Group | | | | |
| CGF | Charging Gateway Function | | | CSAR | Cloud Service Archive |
| | | CPD | Connection Point Descriptor | | |
| CHF | Charging Function | | | CSI | Channel-State Information |
| | | CPE | Customer Premise Equipment | | |
| CI | Cell Identity | | | CSI-IM | CSI Interference Measurement |
| CID | Cell-ID (e.g., positioning method) | CPICH | Common Pilot Channel | | |
| CIM | Common Information Model | CQI | Channel Quality Indicator | CSI-RS | Reference CSI Signal |
| CIR | Carrier to Interference Ratio | CPU | CSI processing unit, Central Processing Unit | CSI-RSRP | CSI reference signal received power |
| CK | Cipher Key | | | | |
| CM | Connection Management, Conditional Mandatory | C/R | Command/Response field bit | CSI-RSRQ | CSI reference signal received quality |
| CMAS | Commercial Mobile Alert Service | CRAN | Cloud Radio Access Network, Cloud RAN | CSI-SINR | CSI signal-to-noise and interference ratio |
| CMD | Command | | | | |
| CMS | Cloud System Management | CRB | Common Resource Block | CSMA Multiple | Carrier Sense Access |
| CSMA/CA | CSMA with collision avoidance | DRB | Data Radio Bearer | EASID | Edge Application Server Identification |
| CSS | Common Search Space, Cell- specific Search Space | DRS | Discovery Reference Signal | | |
| | | | | ECS | Edge Configuration Server |
| | | DRX | Discontinuous Reception | | |
| CTF | Charging Trigger Function | | | ECSP | Edge Computing Service Provider |
| | | DSL | Domain Specific Language. Digital Subscriber Line | | |
| CTS | Clear-to-Send | | | | |
| CW | Codeword | | | EDN | Edge Data Network |
| CWS | Contention Window Size | DSLAM | DSL Access Multiplexer | | |
| | | | | EEC | Edge Enabler Client |
| D2D | Device-to-Device | DwPTS | Downlink Pilot Time Slot | | |
| DC | Dual Connectivity, Direct Current | | | EECID | Edge Enabler Client Identification |
| | | E-LAN | Ethernet Local Area Network | | |
| DCI | Downlink Control Information | | | | |
| | | E2E | End-to-End | EES | Edge Enabler Server |
| DF | Deployment Flavour | EAS | Edge Application Server | | |
| | | | | EESID | Edge Enabler Server Identification |
| DL | Downlink | ECCA | extended clear channel assessment, extended CCA | | |
| DMTF | Distributed Management Task Force | | | | |
| | | | | EHE | Edge Hosting Environment |
| DPDK | Data Plane Development Kit | ECCE | Enhanced Control Channel Element, Enhanced CCE | | |
| | | | | EGMF | Exposure Governance Management Function |
| DM-RS, | DMRS Demodulation Reference Signal | | | | |
| | | ED | Energy Detection | | |
| | | EDGE | Enhanced Datarates for GSM Evolution (GSM Evolution) | | |
| DN | Data network | | | EGPRS | Enhanced GPRS |
| DNN | Data Network Name | | | | |
| | | EAS | Edge Application Server | EIR | Equipment Identity Register |
| DNAI | Data Network Access Identifier | | | | |
| eLAA | enhanced Licensed Assisted Access, enhanced LAA | ETWS | Earthquake and Tsunami Warning System | FBI | Feedback Information |
| | | | | FCC | Federal Communications Commission |
| EM | Element Manager | eUICC | embedded UICC, embedded Universal Integrated Circuit Card | | |
| eMBB | Enhanced Mobile Broadband | | | | |
| | | | | FCCH | Frequency Correction CHannel |
| EMS | Element Management System | E-UTRA | Evolved UTRA | | |
| | | | | FDD | Frequency Division Duplex |
| eNB | evolved NodeB, E-UTRAN Node B | E-UTRAN | Evolved UTRAN | | |
| | | | | FDM | Frequency Division Multiplex |
| EN-DC | E-UTRA-NR Dual Connectivity | EV2X | Enhanced V2X | | |
| | | F1AP | F1 Application Protocol | FDMA | Frequency Division Multiple Access |
| EPC | Evolved Packet Core | F1-C | F1 Control plane interface | FE | Front End |
| | | | | FEC | Forward Error Correction |
| EPDCCH | enhanced PDCCH, enhanced Physical Downlink Control Cannel | F1-U F1 | User plane interface | | |
| | | | | FFS | For Further Study |
| | | FACCH | Fast Associated Control CHannel | FFT | Fast Fourier Transformation feLAA further enhanced Licensed Assisted Access, further enhanced LAA |
| EPRE | Energy per resource element | | | | |
| | | FACCH/F | Fast Associated Control Channel/Full rate | | |
| EPS | Evolved Packet System | | | | |
| EREG | enhanced REG, enhanced resource element groups | FACCH/H | Fast Associated Control Channel/Half rate | FN | Frame Number |
| | | | | FPGA | Field-Programmable Gate Array |
| ETSI | European Telecommunication | FACH | Forward Access Channel | | |
| | | | | FR | Frequency Range |
| s | Standards Institute | FAUSCH | Fast Uplink Signalling Channel | FQDN | Fully Qualified Domain Name |
| | | FB | Functional Block | | |
| G-RNTI | GERAN Radio Network Temporary Identity | GPSI | Generic Public Subscription Identifier | HPLMN | Home Public Land Mobile Network |
| | | | | | |
| | | | | | |
| GERAN | | GSM | Global System for Mobile | HSDPA | High Speed Downlink Packet Access |
| | GSM EDGE RAN, | | | | |
| GSM EDGE | Radio Access Network | | Communications, Groupe Special Mobile | | |
| | | | | HSN | Hopping Sequence Number |
| GGSN | Gateway GPRS Support Node | | | | |
| | | GTP | GPRS Tunneling Protocol | HSPA | High Speed Packet Access |
| GLONASS | GLObal'naya NAvigatsionnaya Sputnikovaya Sistema (Engl.: Global Navigation Satellite System) | | | | |
| | | GTP-UGPRS | Tunnelling Protocol for User Plane | HSS | Home Subscriber Server |
| | | | | | |
| | | | | HSUPA | High Speed Packet Access |
| | | GTS | Go To Sleep Signal (related to WUS) | Uplink | |
| | | | | HTTP | Hyper Text Transfer Protocol |
| | | GUMMEI | Globally Unique MME Identifier | | |
| gNB | Next Generation NodeB | | | HTTPS | Hyper Text Transfer Protocol Secure (https is http/1.1 over SSL, i.e. port 443) |
| | | GUTI | Globally Unique Temporary UE Identity | | |
| gNB-CU | gNB-centralized unit, Next Generation NodeB centralized unit | | | | |
| | | HARQ | Hybrid ARQ, Hybrid Automatic Repeat Request | | |
| | | | | | |
| | | | | I-Block | Information Block |
| gNB-DU | gNB-distributed unit, Next Generation NodeB distributed unit | HANDO | Handover | | |
| | | HFN | HyperFrame Number | ICCID | Integrated Circuit Card Identification |
| | | | | | |
| | | HHO | Hard Handover | IAB | Integrated Access and Backhaul |
| GNSS | Global Navigation Satellite System | HLR | Home Location Register | | |
| | | | | ICIC | Inter-Cell Interference Coordination |
| GPRS | General Packet Radio Service | HN | Home Network | | |
| | | HO | Handover | | |
| | | | | ID | Identity, identifier |
| IDFT | Inverse Discrete Fourier Transform | IMPI | IP Multimedia Private Identity | ISO | International Organisation for Standardisation |
| | | | | | |
| IE | Information element | IMPU | IP Multimedia PUblic identity | | |
| | | | | ISP | Internet Service Provider |
| IBE | In-Band Emission | IMS | IP Multimedia Subsystem | | |
| | | | | IWF | Interworking-Function |
| IEEE | Institute of Electrical and Electronics Engineers | IMSI | International Mobile Subscriber Identity | | |
| | | | | I-WLAN | Interworking |
| IEI | Information Element Identifier | IoT | Internet of Things | WLAN | Constraint length of the convolutional code, |
| | | IP | Internet Protocol Ipsec IP Security, Internet Protocol Security | | |
| IEIDL | Information Element Identifier Data Length | | | | |
| | | | | USIM | Individual key kB Kilobyte (1000 bytes) |
| | | | | | |
| IETF | Internet Engineering Task Force | IP-CAN | IP-Connectivity Access Network | | |
| | | | | kbps | kilo-bits per second |
| | | | | Kc | Ciphering key |
| IF | Infrastructure | IP-M | IP Multicast | Ki | Individual subscriber authentication key |
| IIOT | Industrial Internet of Things | IPv4 | Internet Protocol Version 4 | | |
| | | | | | |
| IM | Interference Measurement, Intermodulation, IP Multimedia | IPv6 | Internet Protocol Version 6 | KPI | Key Performance Indicator |
| | | | | | |
| | | IR | Infrared | KQI | Key Quality Indicator |
| | | IS | In Sync | | |
| IMC | IMS Credentials | IRP | Integration Reference Point | KSI | Key Set Identifier |
| IMEI | International Mobile Equipment Identity | | | ksps | kilo-symbols per second |
| | | ISDN | Integrated Services Digital Network | | |
| | | | | KVM | Kernel Virtual Machine |
| IMGI | International mobile group identity | ISIM | IM Services Identity Module | | |
| | | | | L1 | Layer 1 (physical layer) |
| L1-RSRP | Layer 1 reference signal received power | LPP | LTE Positioning Protocol | MANO | Management and Orchestration |
| | | LSB | Least Significant Bit | | |
| L2 | Layer 2 (data link layer) | | | MBMS | Multimedia Broadcast and Multicast Service |
| | | LTE | Long Term Evolution | | |
| L3 | Layer 3 (network layer) | | | | |
| | | LWA | LTE-WLAN | MBSFN | Multimedia Broadcast multicast service Single Frequency Network |
| LAA | Licensed Assisted Access | | aggregation | | |
| | | LWIP LTE/WLAN | Radio Level Integration with IPsec Tunnel | | |
| LAN | Local Area Network | | | | |
| | | | | MCC | Mobile Country Code |
| LADN | Local Area Data Network | LTE | Long Term Evolution | | |
| | | | | MCG | Master Cell Group |
| LBT | Listen Before Talk | M2M | Machine-to-Machine | | MCOTMaximum Channel Occupancy Time |
| LCM | LifeCycle Management | | | | |
| | | MAC | Medium Access Control (protocol layering context) | MCS | Modulation and coding scheme |
| LCR | Low Chip Rate | | | | |
| LCS | Location Services | | | MDAF | Management Data Analytics Function |
| LCID | Logical Channel ID | MAC | Message authentication code (security/encryption context) | | |
| | | | | MDAS | Management Data Analytics Service |
| LI | Layer Indicator | | | | |
| LLC | Logical Link Control, Low Layer Compatibility | | | MDT | Minimization of Drive Tests |
| | | MAC-A | MAC used for authentication and key agreement (TSG T WG3 context) | | |
| | | | | ME | Mobile Equipment master eNB |
| LMF | Location Management Function | | | MeNB | |
| | | | | MER | Message Error Ratio |
| LOS | Line of Sight | MAC-IMAC | used for data integrity of signalling messages (TSG T WG3 context) | | |
| | | | | MGL | Measurement Gap Length |
| LPLMN | Local PLMN | | | | |
| | | | | MGRP | Measurement Gap Repetition Period |
| MIB | Master Information Block, Management Information Base | MPUSCH | MTC Physical Uplink Shared Channel | MWUS | MTC wake-up signal, MTC WUS |
| MIMO | Multiple Input Multiple Output | MPLS | MultiProtocol Label Switching | NACK | Negative Acknowledgement |
| MLC | Mobile Location Centre | MS | Mobile Station | NAI | Network Access Identifier |
| | | MSB | Most Significant Bit | | |
| MM | Mobility Management | | | NAS | Non-Access Stratum, Non- Access Stratum layer |
| | | MSC | Mobile Switching Centre | | |
| MME | Mobility Management Entity | | | | |
| | | MSI | Minimum System Information, MCH Scheduling Information | NCT | Network Connectivity Topology |
| MN | Master Node | | | | |
| MNO | Mobile Network Operator | | | NC-JT | Non-Coherent Joint Transmission |
| | | | | | |
| MO | Measurement Object, Mobile Originated | MSID | Mobile Station Identifier | | |
| | | | | NEC | Network Capability Exposure |
| | | MSIN | Mobile Station Identification Number | | |
| MPBCH | MTC Physical Broadcast CHannel | | | NE-DC | NR-E-Dual Connectivity |
| | | | | UTRA | |
| | | MSISDN | Mobile Subscriber ISDN Number | | |
| MPDCCH | MTC Physical Downlink Control CHannel | | | NEF | Network Exposure Function |
| | | | | | |
| | | MT | Mobile Terminated, Mobile Termination | NF | Network Function |
| MPDSCH | MTC Physical Downlink Shared CHannel | | | NFP | Network Forwarding Path |
| | | MTC | Machine-Type Communications mMTCmassive MTC, massive Machine-Type Communications | | |
| | | | | NFPD | Network Forwarding Path Descriptor |
| MPRACH | MTC Physical Random Access CHannel | | | | |
| | | | | | |
| | | | | NFV | Network Functions Virtualization |
| | | MU-MIMO | Multi User MIMO | | |
| | | | | NFVI | NFV Infrastructure |
| NFVO | NFV Orchestrator | | Synchronization Signal | O&M | Operation and Maintenance |
| NG | Next Generation, Next Gen | | | | |
| | | NSSS | Narrowband Secondary Synchronization Signal | ODU2 | Optical channel Data Unit - type 2 |
| NGEN-DC | NG-RAN | | | | |
| E-UTRA-NR | Dual Connectivity | | | OFDM | Orthogonal Frequency Division Multiplexing |
| | | | | | |
| NM | Network Manager | NR | New Radio, Neighbour Relation | | |
| NMS | Network Management System | | | OFDMA | Orthogonal Frequency Division Multiple Access |
| | | NRF | NF Repository Function | | |
| N-PoP | Network Point of Presence | | | | |
| | | NRS | Narrowband Reference Signal | OOB | Out-of-band |
| NMIB, N-MIB | Narrowband MIB | | | OOS | Out of Sync |
| | | NS | Network Service | OPEX | OPerating EXpense |
| NPBCH | Narrowband Physical Broadcast CHannel | NSA | Non-Standalone operation mode | OSI | Other System Information |
| | | | | | |
| | | NSD | Network Service Descriptor | OSS | Operations Support System |
| NPDCCH | Narrowband Physical Downlink Control CHannel | | | | |
| | | NSR | Network Service Record | OTA | over-the-air |
| | | | | PAPR | Peak-to-Average Power Ratio |
| NPDSCH | Narrowband Physical Downlink Shared CHannel | NSSAI | Network Slice Selection Assistance Information | | |
| | | | | PAR | Peak to Average Ratio |
| | | | | | |
| NPRACH | Narrowband Physical Random Access CHannel | S-NNSAI | Single-NSSAI | PBCH | Physical Broadcast Channel |
| | | | | | |
| | | NSSF | Network Slice Selection Function | PC | Power Control, Personal Computer |
| NPUSCH | Narrowband Physical Uplink Shared CHannel | | | | |
| | | NW | Network | PCC | Primary Component Carrier, Primary CC |
| | | NWUS | Narrowband wake-up signal, Narrowband WUS | | |
| NPSS | Narrowband Primary | | | | |
| | | | | P-CSCF | Proxy CSCF |
| | | NZP | Non-Zero Power | | |
| PCell | Primary Cell | PEI | Permanent Equipment Identifiers | PRB | Physical resource block |
| PCI | Physical Cell ID, Physical Cell Identity | | | | |
| | | PFD | Packet Flow Description | PRG | Physical resource block group |
| | | | | | |
| PCEF | Policy and Charging Enforcement Function | P-GW | PDN Gateway | ProSe | Proximity Services, Proximity-Based Service |
| | | PHICH | Physical hybrid-ARQ indicator channel | | |
| | | | | | |
| | | | | PRS | Positioning Reference Signal |
| PCF | Policy Control Function | PHY | Physical layer | | |
| | | PLMN | Public Land Mobile Network | PRR | Packet Reception Radio |
| PCRF | Policy Control and Charging Rules Function | | | | |
| | | PIN | Personal Identification Number | PS | Packet Services |
| | | | | PSBCH | Physical Sidelink Broadcast Channel |
| PDCP | Packet Data Convergence Protocol, Packet Data Convergence Protocol layer | PM | Performance Measurement | | |
| | | | | | |
| | | PMI | Precoding Matrix Indicator | PSDCH | Physical Sidelink Downlink Channel |
| | | | | | |
| | | PNF | Physical Network Function | | |
| PDCCH | Physical Downlink Control Channel | | | PSCCH | Physical Sidelink Control Channel |
| | | PNFD | Physical Network Function Descriptor | | |
| | | | | | |
| PDCP | Packet Data Convergence Protocol | PNFR | Physical Network Function Record | PSSCH | Physical Sidelink Shared Channel |
| | | | | | |
| PDN | Packet Data Network, Public Data Network | POC | PTT over Cellular | | |
| | | PP, PTP | Point-to-Point | PSCell | Primary SCell |
| | | | | PSS | Primary Synchronization Signal |
| PDSCH | Physical Downlink Shared Channel | PPP | Point-to-Point Protocol | | |
| | | | | | |
| | | PRACH | Physical RACH | PSTN | Public Switched Telephone Network |
| PDU | Protocol Data Unit | | | | |
| PT-RS | Phase-tracking reference signal | RADIUS | Remote Authentication Dial In User Service | RLC AM | RLC Acknowledged Mode |
| | | | | | |
| PTT | Push-to-Talk | | | RLC UM | RLC Unacknowledged Mode |
| PUCCH | Physical Uplink Control Channel | RAN | Radio Access Network | | |
| | | | | RLF | Radio Link Failure |
| | | RAND | RANDom number (used for authentication) | RLM | Radio Link Monitoring |
| PUSCH | Physical Uplink Shared Channel | | | | |
| | | | | RLM-RS | Reference Signal for RLM |
| | | RAR | Random Access Response | | |
| QAM | Quadrature Amplitude Modulation | | | RM | Registration Management |
| | | RAT | Radio Access Technology | | |
| QCI | QoS class of identifier | | | RMC | Reference Measurement Channel |
| | | RAU | Routing Area Update | | |
| QCL | Quasi co-location | | | RMSI | Remaining MSI, Remaining Minimum System Information |
| QFI | QoS Flow ID, QoS Flow Identifier | RB | Resource block, Radio Bearer | | |
| | | | | | |
| QoS | Quality of Service | RBG | Resource block group | RN | Relay Node |
| QPSK | Quadrature (Quaternary) Phase Shift Keying | | | RNC | Radio Network Controller |
| | | REG | Resource Element Group | | |
| | | | | RNL | Radio Network Layer |
| QZSS | Quasi-Zenith Satellite System | Rel | Release | | |
| | | REQ | REQuest | RNTI | Radio Network Temporary Identifier |
| RA-RNTI | Random Access RNTI | RF | Radio Frequency | | |
| | | RI | Rank Indicator | ROHC | RObust Header Compression |
| RAB | Radio Access Bearer, Random Access Burst | RIV | Resource indicator value | | |
| | | | | RRC | Radio Resource Control, Radio Resource Control layer |
| | | RL | Radio Link | | |
| RACH | Random Access Channel | RLC | Radio Link Control, Radio Link Control layer | | |
| | | | | RRM | Radio Resource Management |
| | | | | RS | Reference Signal |
| RSRP | Reference Signal Received Power | SAE | System Architecture Evolution | SDL | Supplementary Downlink |
| RSRQ | Reference Signal Received Quality | SAP | Service Access Point | SDNF | Structured Data Storage Network Function |
| RSSI | Received Signal Strength Indicator | SAPD | Service Access Point Descriptor | | |
| | | | | SDP | Session Description Protocol |
| RSU | Road Side Unit | SAPI | Service Access Point Identifier | | |
| RSTD | Reference Signal Time difference | | | SDSF | Structured Data Storage Function |
| | | SCC | Secondary Component Carrier, Secondary CC | | |
| RTP | Real Time Protocol | | | SDT | Small Data Transmission |
| RTS | Ready-To-Send | | | | |
| RTT | Round Trip Time | SCell | Secondary Cell | SDU | Service Data Unit |
| Rx | Reception, Receiving, Receiver | SCEF | Service Capability Exposure Function | SEAF | Security Anchor Function |
| | | | | | |
| S1AP | S1 Application Protocol | | | SeNB | secondary eNB |
| | | SC-FDMA | Single Carrier Frequency Division Multiple Access | SEPP | Security Edge Protection Proxy |
| S1-MME | S1 for the control plane | | | | |
| | | | | SFI | Slot format indication |
| S1-U | S1 for the user plane | | | | |
| | | SCG | Secondary Cell Group | SFTD | Space-Frequency Time Diversity, SFN and frame timing difference |
| S-CSCF | serving CSCF | | | | |
| | | SCM | Security Context Management | | |
| S-GW | Serving Gateway | | | SFN | System Frame Number |
| S-RNTI | SRNC Radio Network Temporary Identity | SCS | Subcarrier Spacing | | |
| | | SCTP | Stream Control Transmission Protocol | SgNB | Secondary gNB |
| | | | | SGSN | Serving GPRS Support Node |
| S-TMSI | SAE Temporary Mobile Station Identifier | | | | |
| | | SDAP | Service Data Adaptation Protocol, Service Data Adaptation Protocol layer | S-GW | Serving Gateway |
| | | | | SI | System Information |
| SA | Standalone operation mode | | | SI-RNTI | System Information RNTI |
| SIB | System Information Block | SR | Scheduling Request | | Signal based Signal to Noise and Interference Ratio |
| | | SRB | Signalling Radio Bearer | | |
| SIM | Subscriber Identity Module | | | | |
| | | SRS | Sounding Reference Signal | SSS | Secondary Synchronization Signal |
| SIP | Session Initiated Protocol | | | | |
| | | SS | Synchronization Signal | | |
| SiP | System in Package | | | SSSG | Search Space Set Group |
| SL | Sidelink | SSB | Synchronization Signal Block | | |
| SLA | Service Level Agreement | | | SSSIF | Search Space Set Indicator |
| | | SSID | Identifier Service Set | | |
| SM | Session Management | | | SST | Slice/Service Types |
| | | SS/PBCH | Block | SU-MIMO | Single User MIMO |
| SMF | Session Management Function | SSBRI SS/PBCH | Block Resource Indicator, Synchronization | | |
| | | | | SUL | Supplementary Uplink |
| SMS | Short Message Service | | | | |
| | | | Signal Block Resource Indicator | TA | Timing Advance, Tracking Area |
| SMSF | SMS Function | | | | |
| SMTC | SSB-based Measurement Timing Configuration | SSC | Session and Service Continuity | TAC | Tracking Area Code |
| | | | | | |
| | | SS-RSRP | Synchronization Signal based Reference Signal Received Power | TAG | Timing Advance Group |
| SN | Secondary Node, Sequence Number | | | | |
| | | | | TAI | Tracking Identity |
| SoC | System on Chip | | | Area | |
| SON | Self-Organizing Network Special Cell | | | TAU | Tracking Area Update |
| | | SS-RSRQ | Synchronization Signal based Reference Signal Received Quality | | |
| SpCell | | | | TB | Transport Block |
| SP-CSI-RNTI | Semi-Persistent CSI RNTI | | | TBS | Transport Block Size |
| | | | | | |
| SPS | Semi-Persistent Scheduling | | | TBD | To Be Defined |
| | | SS-SINR | Synchronization | TCI | Transmission Configuration Indicator |
| SQN | Sequence number | | | | |
| TCP | Transmission Communication Protocol | TS | Technical Specifications, Technical Standard | UML | Unified Modelling Language |
| | | | | UMTS | Universal Mobile Telecommunications System |
| TDD | Time Division Duplex | TTI | Transmission Time Interval | | |
| | | | | | |
| TDM | Time Division Multiplexing | Tx | Transmission, Transmitting, Transmitter | UP | User Plane |
| | | | | UPF | User Plane Function |
| | TDMA Time Division Multiple Access | | | | |
| | | U-RNTI | UTRAN Radio Network Temporary Identity | URI | Uniform Resource Identifier |
| TE | Terminal Equipment | | | | |
| | | | | URL | Uniform Resource Locator |
| TEID | Tunnel End Point Identifier | UART | Universal Asynchronous Receiver and Transmitter | | |
| | | | | URLLC | Ultra-Reliable and Low Latency |
| TFT | Traffic Flow Template | | | | |
| | | | | | |
| TMSI | Temporary Mobile Subscriber Identity | UCI | Uplink Control Information | USB | Universal Serial Bus |
| | | | | | |
| TNL | Transport Network Layer | UE | User Equipment | USIM | Universal Subscriber Identity Module |
| | | UDM | Unified Data Management | | |
| TPC | Transmit Power Control | | | USS | UE-specific search space |
| | | UDP | User Datagram Protocol | | |
| TPMI | Transmitted Precoding Matrix Indicator | | | UTRA | UMTS Terrestrial Radio Access |
| | | UDSF | Unstructured Data Storage Network Function | | |
| | | | | UTRAN | Universal Terrestrial Radio Access Network |
| TR | Technical Report | | | | |
| TRP, TRxP | Transmission Reception Point | UICC | Universal Integrated Circuit Card | | |
| | | | | UwPTS | Uplink Pilot Time Slot |
| | | UL | Uplink | | |
| TRS | Tracking Reference Signal | UM | Unacknowledged Mode | V2I | Vehicle-to-Infrastruction |
| | | | | | |
| TRx | Transceiver | | | | |
| V2P | Vehicle-to-Pedestrian | VNFFGD | VNF Forwarding Graph Descriptor | WLAN | Wireless Local Area Network |
| V2V | Vehicle-to-Vehicle | | | WMAN | Wireless Metropolitan Area Network |
| V2X | Vehicle-to-everything | VNFM | VNF Manager | | |
| | | VoIP | Voice-over-IP, Voice-over- Internet Protocol | | |
| VIM | Virtualized Infrastructure Manager | | | WPAN | Wireless Personal Area Network |
| | | | | | |
| VL | Virtual Link, | VPLMN | Visited Public Land Mobile Network | X2-C | X2-Control plane |
| VLAN | Virtual LAN, Virtual Local Area Network | | | X2-U | X2-User plane |
| | | | | XML | eXtensible Markup Language |
| | | VPN | Virtual Private Network | | |
| VM | Virtual Machine | | | XRES | EXpected user RESponse |
| VNF | Virtualized Network Function | VRB | Virtual Resource Block | | |
| | | | | XOR | eXclusive OR |
| VNFFG | VNF Forwarding Graph | WiMAX | Worldwide Interoperability for Microwave Access | ZC | Zadoff-Chu |
| | | | | ZP | Zero Power |

### Terminology

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.*

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

## Claims

1. An apparatus (306) for communication within a Personal Internet of Things Network, the apparatus comprising a radio frequency (RF) interface and one or more processors coupled to the RF interface and configured to:
receive a request from a first Personal Internet of Things Network Element, PINE, (304) to establish a 5G session in a 5G network;
establish a protocol data unit, PDU, session (354) with the 5G network;
transmit an indication of the PDU session (356) to the first PINE;
receive a request from a second PINE (302) to establish a 5G session in the 5G network at an intended QoS; and
transmit an indication of the PDU session (356) for the first PINE to the second PINE.

2. The apparatus of claim 1, wherein the apparatus (306) is further configured to receive data from the PINE (358), and wherein the one or more processors are further configured to send the data received from the PINE to the 5G Network within the PDU session via the RF interface, or
wherein the one or more processors are further configured to send the data received from the 5G Network to the PINE within the PDU session via the RF interface.

3. The apparatus of claim 1 or 2, wherein the apparatus (306) is further configured to receive from the PINE a subscribe-notify request for the apparatus to notify the PINE of a status of the establishment of the PDU session with the 5G network.

4. The apparatus of any one of claims 1 to 3, wherein the apparatus (306) is further configured to map a Local Fully Qualified Domain Name, FQDN, or an IP address of a local PINE to an ID of the PDU and to send data between the PINE and the 5G PDU session using the mapping.

5. The apparatus of any one of claims 1 to 4, wherein the apparatus (306) is configured to receive an intended Quality of Service, QoS, from the PINE for use in establishing the PDU session; and wherein the one or more processors are further configured to establish the PDU session within the intended QoS.

6. The apparatus of any one of claims 1 to 5, wherein the PINE is a first PINE; wherein the QoS is a first QoS; and wherein the one or more processors are further configured to:
receive a request from a second PINE (302) to establish a 5G session in the 5G network at a second QoS, different from the first QoS; and
transmit an indication of the PDU session (356) for the first PINE to the second PINE.

7. The apparatus of any one of claims 1 to 6, wherein the one or more processors are further configured to establish the PDU session based on DSCP markings of IP packets on the Personal Internet of Things Network.

8. The apparatus of any one of claims 1 to 7, wherein the one or more processors are further configured to act as a Network Address Translator, NAT, by representing a unique IP address to the 5G network on behalf of the PINE.

9. The apparatus of any one of claims 1 to 8, wherein the one or more processors are further configured to forward IP packets intended for the PINE based on a Local Fully Qualified Domain Name, FQDN, or an IP address from a central repository of a PIN Element with Management Capability, PEMC.

10. A computer readable medium, comprising instructions which, when executed, cause an apparatus for communication within a Personal Internet of Things Network to implement
a method, the method comprising:
joining a Personal Internet of Things Network, PIN; and
sending data to a PIN Element (306), PINE, for the PINE to send to a 5G system;
sending a request to the PINE with an intended first Quality of Service, QoS, for use in establishing a protocol data unit, PDU, session;
receiving an indication of an existing PDU session (364) between the PINE (306) and
another PINE, wherein the existing PDU has a second QoS; and
transmitting (366) within the existing PDU session.

11. The computer readable medium of claim 10, wherein the method further comprises setting the PINE (306) as a default IP gateway.

12. A computer readable medium, comprising instructions which, when executed, cause an apparatus for communication within a Personal Internet of Things Network to implement
a method comprising:
receiving a request from a first Personal Internet of Things Network Element, PINE, to establishing a 5G session in a 5G network;
establishing a protocol data unit, PDU, session with the 5G network; and
transmitting an indication of the PDU session to the first PINE;
receiving a request from a second PINE (302) to establish a 5G session in the 5G network at an intended QoS; and
transmitting an indication of the PDU session (356) for the first PINE to the second PINE.

## Patentansprüche

1. Einrichtung (306) zur Kommunikation innerhalb eines persönlichen Internet-der-Dinge-Netzwerks, wobei die Einrichtung eine Radiofrequenz- bzw. RF-Schnittstelle und einen oder mehrere Prozessoren umfasst, die mit der RF-Schnittstelle gekoppelt sind und ausgelegt sind zum:
Empfangen einer Anforderung von einem ersten persönlichen Internet-der-Dinge-Netzwerkelement, PINE, (304) zum Einrichten einer 5G-Sitzung in einem 5G-Netzwerk;
Einrichten einer Protokolldateneinheit- bzw. PDU-Sitzung (354) mit dem 5G-Netzwerk;
Übertragen einer Angabe der PDU-Sitzung (356) an das erste PINE;
Empfangen einer Anforderung von einem zweiten PINE (302) zum Einrichten einer 5G-Sitzung in dem 5G-Netzwerk bei einer beabsichtigten QoS; und
Übertragen einer Angabe der PDU-Sitzung (356) für das erste PINE an das zweite PINE.

2. Einrichtung nach Anspruch 1, wobei die Einrichtung (306) ferner ausgelegt ist zum Empfangen von Daten von dem PINE (358), und wobei der eine oder die mehreren Prozessoren ferner ausgelegt sind zum Senden der von dem PINE empfangenen Daten über die RF-Schnittstelle an das 5G-Netzwerk innerhalb der PDU-Sitzung, oder
wobei der eine oder die mehreren Prozessoren ferner ausgelegt sind zum Senden der von dem 5G-Netzwerk empfangenen Daten über die RF-Schnittstelle an die PINE innerhalb der PDU-Sitzung.

3. Einrichtung nach Anspruch 1 oder 2, wobei die Einrichtung (306) ferner ausgelegt ist zum Empfangen, von dem PINE, einer Subskriptionsbenachrichtigungsanforderung für die Einrichtung, um das PINE über einen Status des Einrichtens der PDU-Sitzung mit dem 5G-Netzwerk zu benachrichtigen.

4. Einrichtung nach einem der Ansprüche 1 bis 3, wobei die Einrichtung (306) ferner ausgelegt ist zum Abbilden eines lokalen vollqualifizierten Domänennamens, FQDN, oder einer IP-Adresse eines lokalen PINE auf eine ID der PDU und Senden von Daten zwischen dem PINE und der 5G-PDU-Sitzung unter Verwendung der Abbildung.

5. Einrichtung nach einem der Ansprüche 1 bis 4, wobei die Einrichtung (306) ausgelegt ist zum Empfangen einer beabsichtigten Dienstgüte, QoS, von dem PINE zur Verwendung beim Einrichten der PDU-Sitzung; und wobei der eine oder die mehreren Prozessoren ferner ausgelegt sind zum Einrichten der PDU-Sitzung innerhalb der beabsichtigten QoS.

6. Einrichtung nach einem der Ansprüche 1 bis 5, wobei das PINE ein erstes PINE ist; wobei die QoS eine erste QoS ist; und wobei der eine oder die mehreren Prozessoren ferner ausgelegt sind zum:
Empfangen einer Anforderung von einem zweiten PINE (302) zum Einrichten einer 5G-Sitzung in dem 5G-Netzwerk bei einer zweiten QoS, die sich von der ersten QoS unterscheidet; und
Übertragen einer Angabe der PDU-Sitzung (356) für das erste PINE an das zweite PINE.

7. Einrichtung nach einem der Ansprüche 1 bis 6, wobei der eine oder die mehreren Prozessoren ferner ausgelegt sind zum Einrichten der PDU-Sitzung basierend auf DSCP-Markierungen von IP-Paketen in dem persönlichen Internet-der-Dinge-Netzwerk.

8. Einrichtung nach einem der Ansprüche 1 bis 7, wobei der eine oder die mehreren Prozessoren ferner ausgelegt sind zum Agieren als Netzwerkadressübersetzer, NAT, indem sie dem 5G-Netzwerk im Namen des PINE eine eindeutige IP-Adresse repräsentieren.

9. Einrichtung nach einem der Ansprüche 1 bis 8, wobei der eine oder die mehreren Prozessoren ferner ausgelegt sind zum Weiterleiten von IP-Paketen, die für das PINE bestimmt sind, basierend auf einem lokalen vollqualifizierten Domänennamen, FQDN, oder einer IP-Adresse von einem zentralen Repository eines PIN-Elements mit Verwaltungsfähigkeit, PEMC.

10. Computerlesbares Medium, das Anweisungen umfasst, die, wenn sie ausgeführt werden, eine Einrichtung zur Kommunikation innerhalb eines persönlichen Internet-der-Dinge-Netzwerks veranlassen, ein Verfahren zu implementieren, wobei das Verfahren Folgendes umfasst:
Beitreten zu einem persönlichen Internet-der-Dinge-Netzwerk, PIN; und
Senden von Daten an ein PIN-Element (306), PINE, die das PINE an ein 5G-System senden soll;
Senden einer Anforderung an das PINE mit einer beabsichtigten ersten Dienstgüte, QoS, zur Verwendung beim Einrichten einer Protokolldateneinheit- bzw. PDU-Sitzung;
Empfangen einer Angabe einer bestehenden PDU-Sitzung (364) zwischen dem PINE (306) und
einem anderen PINE, wobei die bestehende PDU eine zweite QoS aufweist; und
Senden (366) innerhalb der bestehenden PDU-Sitzung.

11. Computerlesbares Medium nach Anspruch 10, wobei das Verfahren ferner Festlegen des PINE (306) als ein Standard-IP-Gateway umfasst.

12. Computerlesbares Medium, das Anweisungen umfasst, die, wenn sie ausgeführt werden, eine Einrichtung zur Kommunikation innerhalb eines persönlichen Internet-der-Dinge-Netzwerks veranlassen, ein Verfahren zu implementieren, das Folgendes umfasst:
Empfangen einer Anforderung von einem ersten persönlichen Internet-der-Dinge-Netzwerkelement, PINE, zum Einrichten einer 5G-Sitzung in einem 5G-Netzwerk;
Einrichten einer Protokolldateneinheit- bzw. PDU-Sitzung mit dem 5G-Netzwerk; und
Senden einer Angabe der PDU-Sitzung an das erste PINE;
Empfangen einer Anforderung von einem zweiten PINE (302) zum Einrichten einer 5G-Sitzung in dem 5G-Netzwerk bei einer beabsichtigten QoS; und
Senden einer Angabe der PDU-Sitzung (356) für das erste PINE an das zweite PINE.

## Revendications

1. Appareil (306) pour la communication au sein d'un réseau personnel de l'Internet des objets, l'appareil comprenant une interface radiofréquence (RF) et un ou plusieurs processeurs couplés à l'interface RF et configurés pour :
recevoir d'un premier élément de réseau personnel de l'Internet des objets, PINE, (304) une demande d'établissement d'une session 5G dans un réseau 5G ;
établir une session d'unité de données de protocole, PDU, (354) avec le réseau 5G ;
transmettre une indication de la session PDU (356) au premier PINE ;
recevoir d'un deuxième PINE (302) une demande d'établissement d'une session 5G dans le réseau 5G à une QoS prévue ; et
transmettre au deuxième PINE une indication de la session PDU (356) pour le premier PINE.

2. Appareil selon la revendication 1, l'appareil (306) étant en outre configuré pour recevoir des données en provenance du PINE (358), et le ou les processeurs étant en outre configurés pour envoyer les données reçues du PINE au réseau 5G au sein de la session PDU via l'interface RF, ou
le ou les processeurs étant en outre configurés pour envoyer les données reçues du réseau 5G au PINE au sein de la session PDU via l'interface RF.

3. Appareil selon la revendication 1 ou 2, l'appareil (306) étant en outre configuré pour recevoir du PINE une demande de notification d'abonnement pour que l'appareil notifie au PINE un état de l'établissement de la session PDU avec le réseau 5G.

4. Appareil selon l'une quelconque des revendications 1 à 3, l'appareil (306) étant en outre configuré pour mapper un nom de domaine entièrement qualifié, FQDN, local ou une adresse IP d'un PINE local avec un ID de la PDU et pour envoyer des données entre le PINE et la session PDU 5G en utilisant le mappage.

5. Appareil selon l'une quelconque des revendications 1 à 4, l'appareil (306) étant configuré pour recevoir une qualité de service, QoS, prévue en provenance du PINE pour une utilisation dans l'établissement de la session PDU ; et dans lequel le ou les processeurs sont en outre configurés pour établir la session PDU avec la QoS prévue.

6. Appareil selon l'une quelconque des revendications 1 à 5, dans lequel le PINE est un premier PINE ; dans lequel la QoS est une première QoS ; et dans lequel le ou les processeurs sont en outre configurés pour :
recevoir d'un deuxième PINE (302) une demande d'établissement d'une session 5G dans le réseau 5G à une deuxième QoS, différente de la première QoS ; et
transmettre au deuxième PINE une indication de la session PDU (356) pour le premier PINE.

7. Appareil selon l'une quelconque des revendications 1 à 6, dans lequel le ou les processeurs sont en outre configurés pour établir la session PDU sur la base de marquages DSCP de paquets IP sur le réseau personnel de l'Internet des objets.

8. Appareil selon l'une quelconque des revendications 1 à 7, dans lequel le ou les processeurs sont en outre configurés pour agir en tant que traducteur d'adresse réseau, NAT, en représentant une adresse IP unique pour le réseau 5G pour le compte du PINE.

9. Appareil selon l'une quelconque des revendications 1 à 8, dans lequel le ou les processeurs sont en outre configurés pour transférer des paquets IP destinés au PINE sur la base d'un nom de domaine entièrement qualifié, FQDN, local ou d'une adresse IP provenant d'un dépôt central d'un élément PINE avec capacité de gestion, PEMC.

10. Support lisible par ordinateur, comprenant des instructions qui, lorsqu'elles sont exécutées, entraînent la mise en œuvre d'un procédé par un appareil de communication situé dans un réseau personnel de l'Internet des objets, le procédé comprenant les étapes consistant à :
rejoindre un réseau personnel de l'Internet des objets, PIN ; et
envoyer des données à un élément de PIN (306), PINE, pour que le PINE effectue des envois à un système 5G ;
envoyer une demande au PINE avec une première qualité de service, QoS, prévue, servant à établir une session d'unité de données de protocole, PDU ;
recevoir une indication d'une session PDU existante (364) entre le PINE (306) et
un autre PINE, la PDU existante ayant une deuxième QoS ; et
transmettre (366) au sein de la session PDU existante.

11. Support lisible par ordinateur selon la revendication 10, le procédé comprenant en outre le fait de définir le PINE (306) comme passerelle IP par défaut.

12. Support lisible par ordinateur, comprenant des instructions qui, lorsqu'elles sont exécutées, amènent un appareil de communication situé dans un réseau personnel de l'Internet des objets à mettre en œuvre un procédé comprenant les étapes consistant à :
recevoir d'un premier élément de réseau personnel de l'Internet des objets, PINE, une demande d'établissement d'une session 5G dans un réseau 5G ;
établir une session d'unité de données de protocole, PDU, avec le réseau 5G ; et
transmettre une indication de la session PDU au premier PINE ;
recevoir d'un deuxième PINE (302) une demande d'établissement d'une session 5G dans le réseau 5G à une QoS prévue ; et
transmettre au deuxième PINE une indication de la session PDU (356) pour le premier PINE.
